# EUROPEAN PATENT SPECIFICATION

(11) **EP 4 433 956 B1**
(45) Date of publication and mention of the grant of the patent: **13.05.2026**
(21) Application number: 21811110.2
(22) Date of filing: 15.11.2021
(51) Int. Cl.: G06N 10/20, G06N 10/40, G06N 10/70

(54) **QUANTUM PROCESSING UNIT, QUANTUM COMPUTING SYSTEM, AND METHOD FOR READING OUT STATES OF QUBITS**
QUANTENVERARBEITUNGSEINHEIT, QUANTENCOMPUTERSYSTEM UND VERFAHREN ZUM AUSLESEN VON ZUSTÄNDEN VON QUBITS
UNITÉ DE TRAITEMENT QUANTIQUE, SYSTÈME DE CALCUL QUANTIQUE ET PROCÉDÉ DE LECTURE D'ÉTATS DE BITS QUANTIQUES

(43) Date of publication of application: 25.09.2024
(73) Proprietor: IQM Finland Oy, 02150 Espoo (FI)
(72) Inventor: OCKELOEN-KORPPI, Caspar, 02150 Espoo (FI); HEINSOO, Johannes, 02150 Espoo (FI); SARSBY, Matthew, 02150 Espoo (FI); LÄHTEENMÄKI, Pasi, 02150 Espoo (FI)
(74) Representative: Papula Oy
(86) International application number: PCT/FI2021/050773
(87) International publication number: WO 2023/084143

(56) References cited:
- PECHAL M ET AL: "Characterization and tomography of a hidden qubit", ARXIV.ORG, CORNELL UNIVERSITY LIBRARY, 201 OLIN LIBRARY CORNELL UNIVERSITY ITHACA, NY 14853, 17 November 2020 (2020-11-17), XP081816824
- A. J. SIGILLITO ET AL: "Coherent transfer of quantum information in a silicon double quantum dot using resonant SWAP gates", NPJ QUANTUM INFORMATION, vol. 5, no. 1, 29 November 2019 (2019-11-29), XP055727550, DOI: 10.1038/s41534-019-0225-0

## Description

### FIELD OF THE INVENTION

The invention relates to the technical field of quantum computing. In particular, the invention relates to reading out the states of a plurality of qubits in a quantum processing unit.

### BACKGROUND OF THE INVENTION

A basic functional unit of quantum computing is the qubit, of which there may be a large number on a quantum processing unit. Throughout this description, the term quantum processing unit and its acronym QPU refer to a piece of hardware in which a plurality of circuit elements, at least some of which are suitable and designed for quantum computing, exist in a physical form suitable for being operated in the cryogenically cooled environment that is required for quantum computing. The term quantum circuit refers to a configurable abstraction of quantum gates performed during quantum computation. The term quantum computing system refers to a larger entity that comprises one or more QPUs, the control arrangement located outside the cryogenically cooled environment, and the signal paths between the two.

Each qubit used for a quantum computation assumes a superposition of two basis states. For concise reference, the superposition is often referred to as the quantum state, or simply just state, of the qubit. In general, a multi-qubit system is in a superposition of multi-qubit eigenstates.

In order to obtain a useful result of a quantum computation, a readout operation must be performed. The readout operation causes the quantum state of a single qubit to collapse into one of the possible basis states, resulting in a classical state that can be represented as a digital one or a digital zero. A representative characteristic of any quantum circuit is the coherence time, during which the readout operation must be performed to avoid losing the information represented by the quantum state.

A known way of performing a readout on a qubit involves using a readout resonator. The qubit is weakly coupled to an adjacent readout resonator, and the energy within the qubit causes, by means of qubit nonlinearity, a small shift in the scattering parameters of the combined system consisting of the qubit and the readout resonator. This shift can be detected by transmission of a so-called readout signal, which is a microwave pulse on resonance with the readout resonator.

Assuming that the qubit is a transmon, the interaction between the state of the qubit and the readout signal injected into the readout resonator causes an observable effect in the amplitude and phase of the transmitted signal. This effect is indicative of the classical state observed in the readout operation. From the readout resonator there are further signal paths that eventually transfer the obtained classical state out of the cryogenically cooled environment where the quantum processing unit resides.

The readout resonator must be located close to the qubit, the state of which is to be read. Building the signal paths between the readout resonator in the cryogenically cooled environment and the pro-cessing electronics in the surrounding room temperature environment is non-trivial, as it requires transmission lines operable at gigahertz frequencies with proper filtering and thermal anchoring to cold bodies in the cryostat. Frequency multiplexing may be utilised to share a common transmission line among about ten readout resonators in practice, the limit being related to gate speed and available bandwidth. Slower gates would allow more channels to be frequency-multiplexed if the hardware and software support it, but slower gates are against the overall goal of taking the best advantage of the limited coherence times of the qubits. In a system where the quantum processing unit comprises only a small number of qubits, these are not big problems. However, with the number of qubits in the quantum processing unit increasing it has been found that the physical space requirements of known readout systems as well as the conducted heat and cost related to a large quantity of wiring may become prohibitively large.

Prior art documents that handle known technology on this technical field include PECHAL M ET AL: "Characterization and tomography of a hidden qubit", ARXIV.ORG, CORNELL UNIVERSITY LIBRARY, 201 OLIN LIBRARY CORNELL UNIVERSITY ITHACA, NY 14853, 17 November 2020, as well as A. J. SIGILLITO ET AL: "Coherent transfer of quantum information in a silicon double quantum dot using resonant SWAP gates", NPJ QUANTUM INFORMATION, vol. 5, no. 1, 29 November 2019, DOI: 10.1038/s41534-019-0225-0.

### SUMMARY

It is an objective to present a quantum pro-cessing unit, a quantum computing system, and a method that enable reading out the states of a plurality of qubits without requiring extensive space for the readout-related circuitry. Another objective is to present a quantum processing unit, a quantum computing system, and a method that allow tailoring the readout operations for specific needs in systems that have a large number of qubits. A yet further objective is to reduce the amount of conducted heat and cost related to the wiring of quantum computing systems.

These and other advantageous objectives are achieved by providing a readout resonator that can be used to sequentially read out a plurality of qubits, most of which are far from the readout resonator. Swap gates are utilized to transfer the quantum state of each qubit in turn to a location closest to the common readout resonator.

According to a first aspect, there is provided a quantum processing unit comprising a first qubit, a plurality of other qubits and a readout resonator. Each of said first and plurality of other qubits is configured to acquire, as a result of a quantum computing operation, a quantum state specific to that qubit. Said first qubit of said plurality of qubits is located closer to said readout resonator than any of said plurality of other qubits. The quantum processing unit comprises a plurality of couplers, which are configured to, in response to respective swap gate control signals, selectively perform swap gates between respective pairs of said first and plurality of other qubits to make the qubits of said respective pairs swap states. Said couplers are configured to make, by repeatedly performing said swap gates, the acquired quantum state of each of said plurality of other qubits appear in turn in said first qubit. Said first and plurality of other qubits constitute a first subset of all qubits in said quantum processing unit. The quantum processing unit comprises one or more other subsets of qubits, and a plurality of readout resonators, of which at least a respective one is available for being dedicated for each said subset of qubits. The quantum processing unit comprises a two-dimensional area on a substrate, and said subsets of qubits span said two-dimensional area. Said first subset comprises tuned qubits and either parked qubits or fixed frequency qubits in an alternating pattern, parked qubits being qubits kept on a respective resonance frequency. Resonance frequencies of the parked qubits or fixed frequency qubits in said alternating pattern follow a rotating pattern of three different frequencies. A second subset comprises tuned and either parked qubits or fixed frequency qubits in an alternating pattern, with resonance frequencies of the parked qubits or fixed frequency qubits in said alternating pattern following the same rotating pattern of three different frequencies as in the first subset. The tuned qubits and parked or fixed frequency qubits of said first and second subsets are located at vertices of a hexagonal grid so that the three nearest neighbours of each parked or fixed frequency qubit in said grid are tuned qubits and the three nearest neighbours of each tuned qubit in said grid are parked or fixed frequency qubits of which each has a unique one of said three different frequencies.

This involves, among others, the advantage that even a very large number of qubits can be read out without spending more time and without losing more fidelity than what is acceptable. Also, even a very large number of qubits can be implemented, and their acquired quantum states be read out in a reasonable space. Further, a relatively simple readout scheme can be implemented, without the risk of causing unwanted interference between qubits of neighbouring subsets.

According to an embodiment, there are more than 10, preferably more than 100, and most preferably more than 1000 qubits in said first and plurality of qubits. This involves, among others, the advantage that the advantageous properties of this particular readout scheme become more and more apparent, because applying it together with an increasing number of qubits results in more substantive savings in space, manufacturing cost, hardware complicatedness, and thermal loading of the cryogenic cooling equipment.

According to an embodiment, said couplers are configured to controllably change an order in which they make the acquired quantum state of each of said plurality of other qubits appear in said first qubit. This involves, among others, the advantage that the order in which the acquired quantum states of qubits are read out can be dynamically adapted to the requirements of the quantum computation operation to be performed.

According to an embodiment, said couplers are configured to controllably change the dedication of readout resonators of said plurality of readout resonators to subsets of qubits. This involves, among others, the advantage that the grouping of qubits, the acquired quantum states of qubits are to be read out, can be dynamically adapted to the requirements of the quantum computation operation to be performed.

According to an embodiment, said plurality of readout resonators are located at one or more edges of said two-dimensional area. This involves, among others, the advantages that wiring to the readout resonators is relatively simple and the readout resonators do not reserve space from the central portions of the two-dimensional area.

According to an embodiment, at least some of said plurality of readout resonators are distributed across said two-dimensional area. This involves, among others, the advantage of allowing more freedom in deciding about the grouping of qubits.

According to a second aspect there is provided a quantum computing system that comprises a quantum pro-cessing unit of some kind introduced above, as well as a control arrangement and a plurality of signal paths between said quantum processing unit and said control arrangement. Said control arrangement is configured to provide said swap gate control signals to the couplers in said quantum processing unit.

According to an embodiment, said control arrangement is configured to dynamically determine a readout order of at least some of the plurality of other qubits in the quantum processing unit and provide said swap control signals to the couplers in conformity with the dynamically determined readout order, to make the acquired quantum state of each of said at least some of the plurality of other qubits appear in said first qubit in the determined readout order. This involves, among others, the advantage that the operation of the quantum computing system can be flexibly optimized to each quantum computing task to be performed.

According to an embodiment, the plurality of qubits in the quantum processing unit comprises computing qubits and ancilla qubits. The control arrangement may then be configured to read out the states of at least some of said ancilla qubits multiple times before reading out the states acquired by the computing qubits. This involves, among others, the advantage of enabling effective error detection without sacrificing any of the other advantageous characteristics of the system.

According to an embodiment, said computing qubits constitute a first matrix pattern on a surface of the quantum processing unit and said ancilla qubits constitute a second matrix pattern, intertwined with said first matrix pattern, on said surface of the quantum pro-cessing unit. This involves, among others, the advantage that all computing qubits, or at least a large proportion of the computing qubits, can be subjected to error correction using the ancilla qubits.

According to a third aspect there is provided a method for reading out states of qubits in a quantum computing system. The method comprises repeatedly performing swap gates among pairs of qubits in a set including a first qubit and a plurality of other qubits to make the state acquired, as a result of a quantum computing operation, by each of said plurality of other qubits appear in turn in said first qubit. The method comprises also repeatedly performing readout operations on said first qubit using a readout resonator to which said first qubit is closer than any of said plurality of qubits, thus sequentially reading out the acquired state of each of said plurality of other qubits that was made to appear in turn in the first qubit. The method comprises performing said readout operations in a first subset of all qubits in said quantum processing unit and one or more other subsets of qubits, using at least a respective one of a plurality of readout resonators dedicated for each said subset of qubits. In said first subset, tuned qubits and either parked qubits or fixed frequency qubits are used in an alternating pattern, wherein parked qubits are qubits kept on a respective resonance frequency and wherein resonance frequencies of the parked qubits or fixed frequency qubits in said alternating pattern follow a rotating pattern of three different frequencies. In a second subset, tuned and either parked qubits or fixed frequency qubits are used in an alternating pattern, wherein resonance frequencies of the parked qubits or fixed frequency qubits in said alternating pattern follow the same rotating pattern of three different frequencies as in the first subset. The tuned qubits and parked or fixed frequency qubits of said first and second subsets are located at vertices of a hexagonal grid so that the three nearest neighbours of each parked or fixed frequency qubit in said grid are tuned qubits and the three nearest neighbours of each tuned qubit in said grid are parked or fixed frequency qubits of which each has a unique one of said three different frequencies.

### BRIEF DESCRIPTION OF THE DRAWINGS

The accompanying drawings, which are included to provide a further understanding of the invention and constitute a part of this specification, illustrate embodiments and examples of the invention and together with the description help to explain the principles of the invention. In the drawings:
**Figure 1** illustrates a quantum processing unit,
**figure 2** illustrates an example of a readout and swap gate operations sequence,
**figure 3** illustrates a quantum processing unit,
**figure 4** illustrates a possible readout order of qubits in a quantum processing unit,
**figure 5** illustrates a possible readout order of qubits in a quantum processing unit,
**figure 6** illustrates a possible readout order of qubits in a quantum processing unit according to an embodiment of the invention,
**figure 7** illustrates an example of using ancilla qubits,
**figure 8** illustrates a quantum computing system, and
**figure 9** illustrates a method.

### DETAILED DESCRIPTION

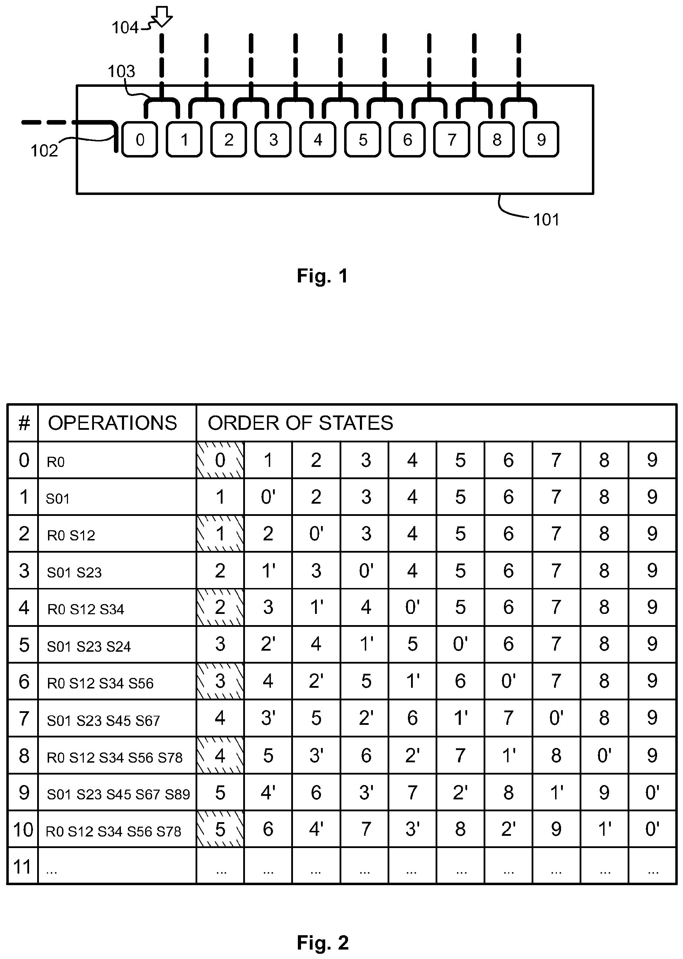

Fig. 1 is a simplified schematic representation of a quantum processing unit 101. It comprises a plurality of qubits, which are here shown as rounded rectangles numbered from zero to nine. Additionally, the quantum processing unit 101 comprises a readout resonator 102. Each of the plurality of qubits is configured to acquire, as a result of a quantum computing operation, a quantum state specific to that qubit. In order to get a useful result out of the quantum computing operation, a readout operation should be performed on each qubit or at least a selected group of the qubits.

Among the plurality of qubits, one qubit is located closest to the readout resonator 102. This closest qubit could be referred to as the first qubit, although it must be noted that numerical designators like first, second, etc. are used only for unambiguous reference, without necessarily indicating any geometrical or otherwise defined order. In the graphical representation of fig. 1, the first qubit is the leftmost one, with the number 0.

Additionally, the quantum processing unit comprises a plurality of couplers, of which the coupler 103 located adjacent to the leftmost qubit and the immediately neighbouring second leftmost qubit is shown as an example. The couplers are configured to, in response to respective swap gate control signals 104, selectively perform swap gates between respective pairs of the qubits. A swap gate between a pair of qubits is an operation that swaps the quantum states of these two qubits. A swap gate control signal 104 brought to the leftmost coupler 103 in fig. 1 makes the leftmost and second leftmost qubits in fig. 1 swap states.

In particular, the couplers are configured to make, by repeatedly performing said swap gates, the acquired quantum state of each of the plurality of qubits appear in turn in the first (i.e. leftmost) qubit in fig. 1. This way only one readout resonator is needed to perform all the readout operations that are necessary to read out the states of the ten qubits in the quantum processing unit 101.

As an example, the acquired state of the first (leftmost) qubit in fig. 1 can be read out with the readout resonator 102 without performing any swap gates. After that, a single swap gate may be performed using the coupler 103, making the quantum state originally acquired by the second leftmost qubit appear in the first qubit for reading out with the readout resonator 102. Next, two swap gates may be performed using the second leftmost and leftmost couplers in sequence, after which the quantum state originally acquired by the third leftmost qubit appears in the first qubit for reading out, and so on.

A notation may be adopted in which Rx means reading out the state of the x'th qubit in fig. 1. As there is a readout resonator 102 adjacent to only the 0th qubit, in this example x=0. Similarly, in the adopted notation Syz (y ∈ [0,8], z = y+1) means a swap gate between the y'th and z'th qubits. Using this notation, consecutive cycles of readout and swap gate operations can be illustrated as in the table shown in fig. 2.

In fig. 2, a hatched edge of a table cell highlights a readout operation. On line number zero, the consecutive numbers from 0 to 9 show the acquired quantum states of the qubits in the exemplary 10-qubit quantum processing unit of fig. 1. Performing R0, i.e. reading out the quantum state of the 0th qubit, collapses it into a classical state. This is shown as 0' from the second line onwards in fig. 2. Line number one in the table shows how performing a swap gate S01 swaps the states of the two leftmost qubits so that the acquired quantum state 1 of the 1st qubit now appears in the leftmost qubit, while the collapsed classical state 0' of the 0th qubit now appears in the second leftmost qubit. On line number two, a readout operation R0 reads out the quantum state 1 of the 1st qubit and collapses it into a classical state 1'. On the same line, a swap gate S12 swaps the states of the second leftmost and third leftmost qubits. Similar operations continue, so that each quantum state is transferred to the leftmost qubit and read out in turn. The resulting classical states begin to migrate to the right in the line of qubits.

Line number 10 in the table of fig. 2 shows how the classical states 1' and 0' have migrated to the two rightmost qubits. It is good to note that the operations R0-S12-S34-S56-S78 on line number 10 are the same as on line number 8. The table could be straightforwardly continued so that line number 11 would repeat the operations of line number 7, line number 12 would repeat the operations of line number 6, and so on. After a total of 18 lines the quantum states previously acquired by all qubits would have been read out, and the resulting classical states would appear in the qubits in a mirrored order with reference to line number zero in the table.

The single row of qubits in fig. 1 can be thought to represent a subset of qubits in a larger quantum processing unit. As an example, we may consider 1024 qubits arranged in a rectangular array of 32 rows and 32 columns, with a row-specific readout resonator for each row at an edge of the array. Further assuming that frequency multiplexing allows sharing a common transmission line among 8 resonators, reading out all the 1024 qubits would only require 4 lines in and 4 lines out, in addition to the control lines needed to perform the swap gates.

Further assuming that all rows can be read out and all swap gates be performed in parallel, one may estimate the time needed for the readout. Tabulating the readout sequence for a single row as in the table of fig. 2 would mean a table in which 32 lines include both a readout operation and swap gates and 32 further lines include just swap gates. If a swap gate can be performed in 50 nanoseconds, and if a readout operation takes 100 nanoseconds, the 32+32 lines in the table could be executed in 4.8 microseconds. Taken that coherence times of the order of 100 microseconds have been demonstrated up to the time of writing this text, this is more than quick enough for performing the readout.

In the example above, the acquired quantum state of the last qubit in the row would undergo 32 swap gates before readout. Assuming 99.95 per cent fidelity per swap gate, this would mean a worst fidelity loss in the order of less than 2 per cent (0.9995^32 ≈ 0.9841).

As indicated above, the advantages achieved with the suggested way of reading out are most prominent when there is a large number of qubits in the quantum processing unit. There may be more than 10, or more than 100, or more than 1000 qubits in the quantum processing unit.

Most preferably the couplers, which are configured to perform the swap gates, are configured to controllably change the order in which they make the acquired quantum state of each qubit appear in the qubit adjacent to the readout resonator. That is, by selecting the order in which the swap gates are performed, the qubits that share a common readout resonator can be subjected to readout operations in a desired order. As a simple example, if the first four qubits (qubits 0, 1, 2, and 3) in fig. 1 were to be read out in the order 0-3-1-2, one could execute operations R0, S01-S23, S12, S01-S23, R0, S01, R0-S12, S01, R0.

As already indicated in the example of 1024 qubits in a 32x32 array, there may be a first subset of qubits as well as one or more other subsets of qubits. The quantum processing unit may then comprise a plurality of readout resonators, or which at least a respective one is available for being dedicated for each subset of qubits. The example in which each subset is a row of qubits in a rectangular array and the dedicated, subset-specific readout resonator is at one end of the row is for illustrative purposes only. Below, further examples are given for arranging the subsets and readout resonators geometrically.

The couplers may be configured to controllably change the dedication of readout resonators to subsets of qubits. This means that the chain of qubits, the acquired quantum states of which end up to a particular qubit for readout, may be different at different times. In a very simple example, there could be two readout resonators in the quantum processing unit of fig. 1, one at each end of the row of qubits. At one time, the couplers could make, by repeatedly performing swap gates, the acquired quantum states of, say, the 0th, 1st, 2nd, 3rd, and 5th appear in turn in the 0th qubit and the acquired quantum states of the 4th, 6th, 7th, 8th, and 9th qubit appear in turn in the 9th qubit. At some other time, this division into subsets could go in some other way.

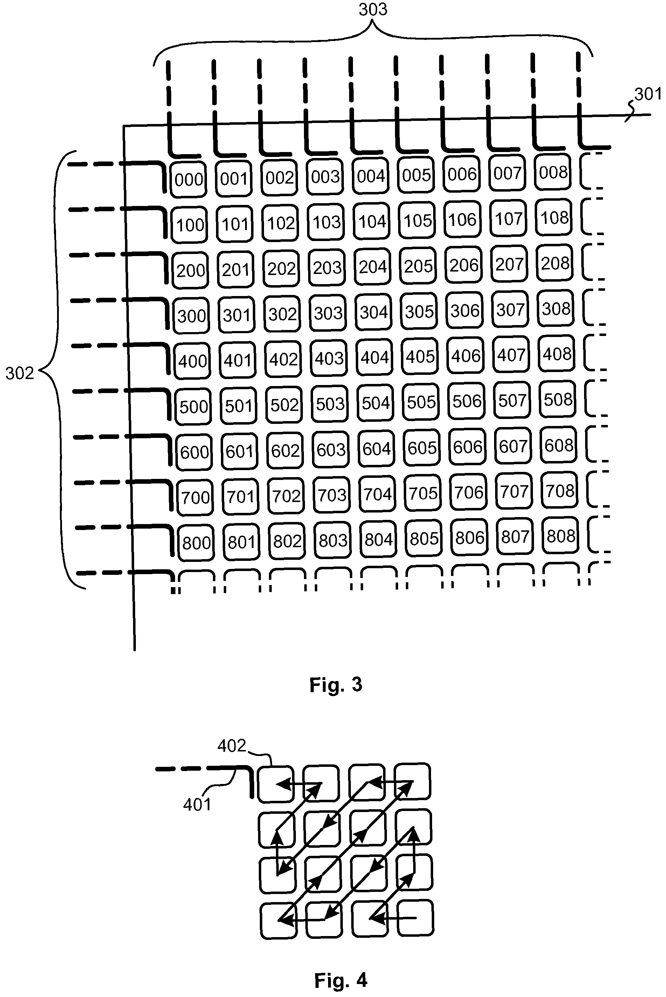

Fig. 3 illustrates an example of a quantum processing unit that comprises a two-dimensional area on a substrate 301. Subsets of qubits span the two-dimensional area. In this embodiment, the qubits form a rectangular array. Couplers are not shown in fig. 3 for reasons of graphical clarity. A plurality of readout resonators 302 are located at one edge of the two-dimensional area. In this embodiment, a second plurality of readout resonators 303 are located at a second edge of the two-dimensional area.

The principle shown in fig. 3 is well suited for controllably changing the dedication of readout resonators to subsets of qubits. For example, at one time, a subset of qubits dedicated to one of the readout resonators 302 on the left edge in fig. 3 may comprise a row of qubits, like qubits 100, 101, 102, 103, 104, and so on. At some other time (or even at the same time), a subset of qubits dedicated to one of the readout resonators 303 on the top edge in fig. 3 may comprise a column of qubits, like qubits 001, 101, 201, 301, 401, and so on.

Qubits need not form a rectangular array on the surface of the substrate. Even if they do, it is not necessary to define the subsets of qubits as linear subsets, such as rows or columns. Fig. 4 illustrates an example, in which a subset of qubits comprises sixteen qubits in a 4x4 array, with the readout resonator 401 located adjacent to the qubit 402 in the top left corner of the array. Couplers are not shown in fig. 4 for reasons of graphical clarity. Couplers exist, however, and are configured to make, by repeatedly performing swap gates, the acquired quantum state of each of the sixteen qubits appear in turn in the top left qubit 402. The order in which the readout takes place follows the zig-zag pattern of arrows in fig. 4. For example, in order to read out the acquired quantum state of the lower right qubit, said quantum state is first swapped one qubit to the left, then obliquely to upper right, then directly up, then obliquely to lower left, and so on.

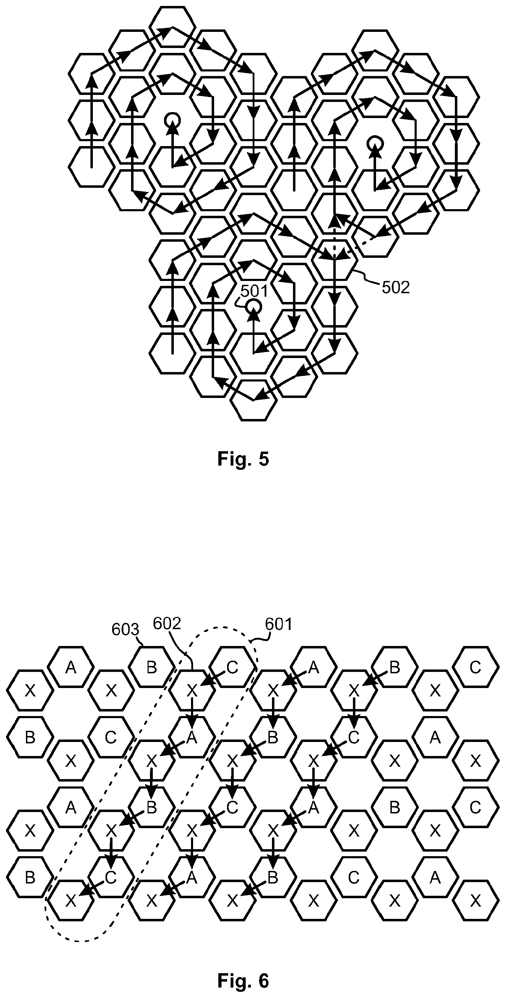

Fig. 5 illustrates a number of exemplary principles, which as such are independent of each other and could be equally applied in combination with other principles. First, the qubits in fig. 5 do not form a rectangular array but some other, here a hexagonal array. As such, there is no need to make the qubits form any kind of regular array. Second, at least some of the plurality of readout resonators are distributed across the two-dimensional area spanned by the qubits. Readout resonators are schematically represented as circles; see readout resonator 501 for example. Individual readout resonators can exist in e.g. a checkerboard arrangement or in general at regions in the centre of the quantum processing unit with the subset of qubits intended for each readout resonator typically located in the immediate surrounding area of such a readout resonator.

Third, the (default) subsets of qubits are not linear but form a compact (here: regular hexagonal) pattern around their dedicated readout resonator. Fourth, the division of the qubits into subsets does not need to be constant: for example, qubit 502 in fig. 5 could be read out as a part of the bottom subset as indicated with the solid arrows or as a part of the top right subset as indicated with the dashed arrows, by suitably controlling the swap gates performed by the couplers (which couplers are not shown in fig. 5 for reasons of graphical clarity).

Fig. 6 illustrates an example of a driving embodiment in which one half of the qubits are tuned qubits while the other half are parked qubits or fixed frequency qubits. Parked qubits are qubits that by the structure of them and their associated circuitry could be tuned onto different resonance frequencies but that are kept, for the time being, on a respective resonance frequency. Here there are three different frequencies for parked qubits, marked with A, B, and C respectively. Fixed frequency qubits are qubits that have a single, fixed resonance frequency A, B, or C. Using fixed frequency qubits may involve certain advantages in simpler structural and electrical design, while using parked qubits involves the advantage that one does not have to commit to predetermined frequencies.

The tuned qubits are marked with X. A first subset of qubits 601 is highlighted with a dashed oval. Said first subset is formed of a chain of qubits and comprises tuned qubits and parked or fixed frequency qubits in an alternating pattern, so that every second qubit is a tuned qubit and the others are parked or fixed frequency qubits. The resonance frequencies of the parked or fixed frequency qubits follow a rotating pattern A-B-C-A-B-C... so that as a whole, the first subset of qubits 601 goes like A-X-B-X-C-X-A-X-B-X-C-X...

A second subset of qubits is similar to the first in fig. 6. In other words, the second subset comprises tuned qubits and parked or fixed frequency qubits in an alternating pattern, with resonance frequencies of the parked or fixed frequency qubits in said alternating pattern following the same rotating pattern of three different frequencies as in the first subset.

In the embodiment of fig. 6, the tuned qubits and parked or fixed frequency qubits of the first and second subsets (as well as further subsets) are located at vertices of a hexagonal grid. In particular, the three nearest neighbours of each parked or fixed frequency qubit in said grid are tuned qubits and the three nearest neighbours of each tuned qubit in said grid are parked or fixed frequency qubits of which each has a unique one of the three different frequencies A, B, and C.

This arrangement of tuned qubits and parked or fixed frequency qubits allows a scheme in which consecutive tuning steps of the tuned qubits bring them into resonance with the appropriate parked qubit at each moment. Considering the tuned qubit 602 for example, it may be tuned into resonance with the parked or fixed frequency qubit at resonance frequency C on its upper right in the same subset 601. Subsequently, the tuned qubit 602 may be tuned into resonance with the parked or fixed frequency qubit at resonance frequency A below it in the same subset 601. Neither of these tuning steps causes any unwanted resonance with the nearest parked or fixed frequency qubit 603 of a different subset, which is the parked or fixed frequency qubit at resonance frequency B to its upper left. By combining flux and drive, this scheme would require 1024 control lines for a grid of 1024 qubits, and 8 lines to read them all (assuming a factor of 8 frequency multiplexing on 4 lines in and 4 lines out to read out 32 qubits simultaneously).

In an embodiment like that in fig. 6, or indeed in any embodiment, the number of control lines that are needed to perform the swap gates can be efficiently reduced by applying the Additive Control principle explained in the co-pending patent application published as WO 2021/156542. In short, the Additive Control principle involves sending weak control signals through an array of control lines in the quantum processing unit. One weak control signal alone does not significantly affect the qubits (or other controllable circuit elements) close to that control line. However, a qubit (or other controllable circuit element) that has two or more control lines passing close to it, with a weak control signal propagating simultaneously through each of said two or more control lines, experiences the combined effect of those control signals and becomes affected as intended. For example, assuming a 32x32 rectangular grid of qubits, 64 control lines (32 along the rows and 32 along the columns of qubits) may be sufficient. Termination is excluded in this calculation for simplicity. As mentioned earlier, an additional total of 8 lines for readout (assuming 32 readout resonators and 8-fold frequency multiplexing) may suffice.

While the repeated swap gates between qubits cause only a small degradation in fidelity, such a degradation cannot be completely avoided. However, the readout schemes explained above allow building much more qubits into a quantum computing system that only allows for a certain number of signal paths between the cryogenically cooled environment and the room temperature environment. Performing quantum error correction through proper use of such a larger number of qubits may well outweigh the potential source of errors caused by the degraded fidelity.

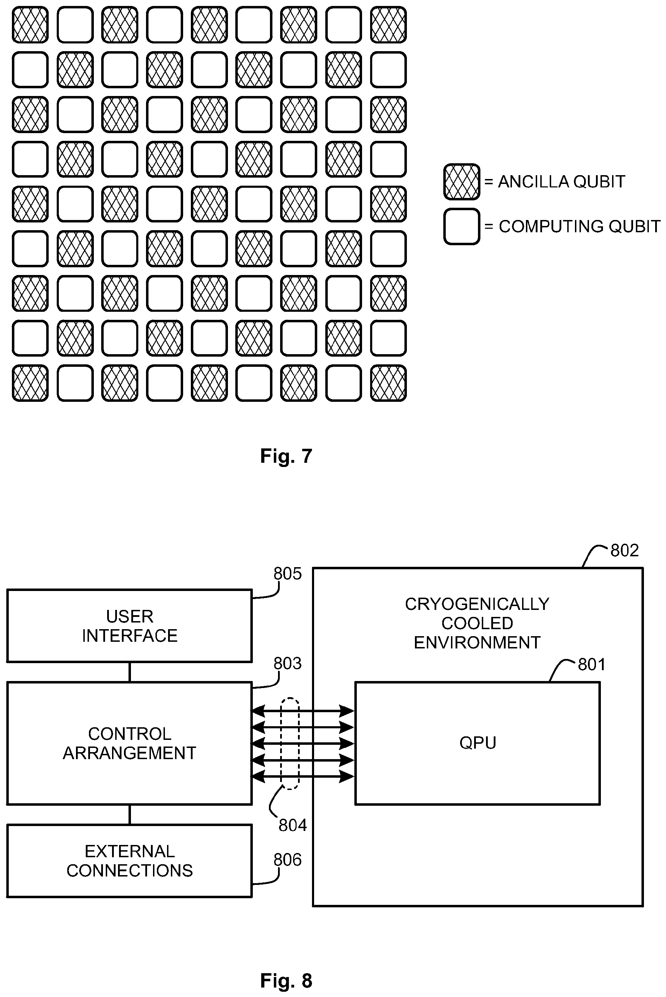

Fig. 7 illustrates an example of a quantum processing unit that comprises so-called ancilla qubits as well as the actual computing qubits. As is well known on this technical field, ancilla qubits can be used for parity measurements as a part of quantum error correction. In the embodiment of fig. 7, the ancilla qubits and computing qubits form a checkerboard pattern in which every second qubit is an ancilla qubit as shown with the cross-hatching in fig. 7. In other words, the computing qubits constitute a first matrix pattern on a surface of the quantum processing unit and the ancilla qubits constitute a second matrix pattern, intertwined with said first matrix pattern, on said surface of the quantum processing unit.

Ancilla qubits are the ones that need to be read out often, while the computing qubits only need to be read out at the end of a quantum computation. Reading out the ancilla qubits does not perturb the actual data, which resides in the quantum states of the computing qubits. The quantum processing unit may comprise dedicated readout resonators for the ancilla qubits for fastest possible readout. As an alternative, there may be relatively small subsets of ancilla qubits, each such relatively small subset with a dedicated readout resonator. At the end of the quantum computation, swap gates may be performed to eventually make the states of the computing qubits appear in those ancilla qubits that have readout resonators.

Fig. 8 illustrates schematically a quantum computing system. It comprises a quantum processing unit 801, which may be of any kind described above. The quantum processing unit 801 is located in a cryogenically cooled environment 802. The quantum computing system comprises a control arrangement 803, which is (at least partly) located outside the cryogenically cooled environment 802. Additionally, the quantum computing system comprises a plurality of signal paths 804 between the quantum processing unit 801 and the control arrangement 803. In accordance with the description above, the control arrangement 803 is configured to provide swap gate control signals to the couplers in the quantum processing unit 801, in order to make the acquired quantum states of the qubits in each subset appear in those subset-specific qubits that are located close enough to the nearest readout resonator.

The control arrangement 803 may be configured to dynamically determine a readout order of at least some of the plurality of qubits in the quantum pro-cessing unit 801. As the quantum computation proceeds, there may be varying needs of reading out the states of various qubits, and the dynamic determination of a readout order provides flexibility in view of such needs. The control arrangement 803 may then be configured to provide said swap control signals to the couplers in the quantum processing unit 801 in conformity with the dynamically determined readout order. This will make the acquired quantum state of each of the qubits (or at least of some desired portion of the qubits) appear in one or more "readout qubits" in the determined readout order.

If the quantum processing unit 801 comprises computing qubits and ancilla qubits, the control arrangement may be configured to read out the states of at least some of said ancilla qubits multiple times before reading out the states acquired by the computing qubits. As explained above, frequently reading out the states of the ancilla qubits may help in performing quantum error correction, without perturbing the information that resides in the quantum states of the computing qubits.

The quantum computing system may comprise at least one of a user interface 805 for local control of its operation and external connections 806 for remote control of its operation and exchange of information with other systems.

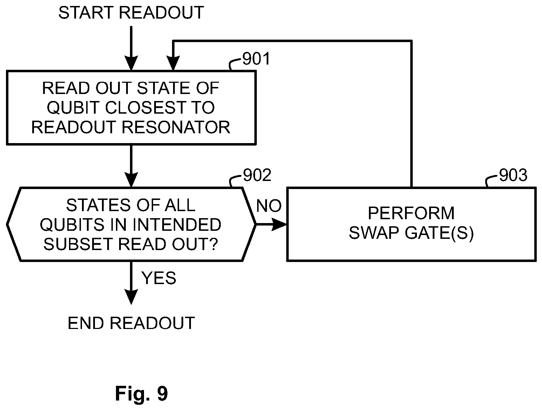

Fig. 9 illustrates a method for reading out states of qubits in a quantum computing system. The method comprises repeatedly performing swap gates among a plurality of qubits to make the state acquired, as a result of a quantum computing operation, by each of said plurality of qubits appear in turn in a first qubit of said plurality of qubits. Additionally, the method comprises repeatedly performing readout operations on said first qubit, thus sequentially reading out the acquired state of each of said plurality of qubits that was made to appear in turn in the first qubit. In the graphical representation of fig. 9, the swap gates are performed in step 903 and the readout operations are performed in step 901. The repetition of these comes from the decision-making step 902, in which it is checked, whether the states of all desired qubits in the subset have already been read out. The loop consisting of steps 901, 902, and 903 is circulated until a positive finding at step 902, at which the method proceeds to an end.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A quantum processing unit, comprising a first qubit, a plurality of other qubits and a readout resonator, wherein:
- each of said first and plurality of other qubits is configured to acquire, as a result of a quantum computing operation, a quantum state specific to that qubit,
- said first qubit is located closer to said readout resonator than any of said plurality of other qubits,
- the quantum processing unit comprises a plurality of couplers, said couplers being configured to, in response to respective swap gate control signals, selectively perform swap gates between respective pairs among said first and plurality of other qubits to make the qubits of said respective pairs swap states,
- said couplers are configured to make, by repeatedly performing said swap gates, the acquired quantum state of each of said plurality of other qubits appear in turn in said first qubit,
- said first and plurality of other qubits constitute a first subset of all qubits in said quantum pro-cessing unit,
- the quantum processing unit comprises one or more other subsets of qubits,
- the quantum processing unit comprises a plurality of readout resonators, of which at least a respective one is available for being dedicated for each said subset of qubits,
- the quantum processing unit comprises a two-dimensional area on a substrate, and
- said subsets of qubits span said two-dimensional area,
**characterized in that**
- said first subset comprises tuned qubits and either parked qubits or fixed frequency qubits in an alternating pattern, parked qubits being qubits kept on a respective resonance frequency,
- resonance frequencies of the parked qubits or fixed frequency qubits in said alternating pattern follow a rotating pattern of three different frequencies,
- a second subset comprises tuned and either parked qubits or fixed frequency qubits in an alternating pattern, with resonance frequencies of the parked qubits or fixed frequency qubits in said alternating pattern following the same rotating pattern of three different frequencies as in the first subset,
- the tuned qubits and parked or fixed frequency qubits of said first and second subsets are located at vertices of a hexagonal grid so that the three nearest neighbours of each parked or fixed frequency qubit in said grid are tuned qubits and the three nearest neighbours of each tuned qubit in said grid are parked or fixed frequency qubits of which each has a unique one of said three different frequencies.

2. A quantum processing unit according to claim 1, wherein there are more than 10, preferably more than 100, and most preferably more than 1000 qubits in said first and plurality of other qubits.

3. A quantum processing unit according to any of claims 1 or 2, wherein said couplers are configured to controllably change an order in which they make the acquired quantum state of each of said plurality of other qubits appear in said first qubit.

4. A quantum processing unit according to claim 1, wherein:
- said couplers are configured to controllably change the dedication of readout resonators of said plurality of readout resonators to subsets of qubits.

5. A quantum processing unit according to any of claims 1 or 4, wherein said plurality of readout resonators are located at one or more edges of said two-dimensional area.

6. A quantum processing unit according to any of claims 1 or 4, wherein at least some of said plurality of readout resonators are distributed across said two-dimensional area.

7. A quantum computing system, comprising:
- a quantum processing unit according to any of claims 1 to 6,
- a control arrangement, and
- a plurality of signal paths between said quantum processing unit and said control arrangement;
wherein said control arrangement is configured to provide said swap gate control signals to the couplers in said quantum processing unit.

8. A quantum computing system according to claim 7, wherein said control arrangement is configured to:
- dynamically determine a readout order of at least some of the plurality of other qubits in the quantum processing unit, and
- provide said swap control signals to the couplers in conformity with the dynamically determined readout order, to make the acquired quantum state of each of said at least some of the plurality of other qubits appear in said first qubit in the determined readout order.

9. A quantum computing system according to any of claims 7 or 8, wherein:
- the qubits in the quantum processing unit comprise computing qubits and ancilla qubits, and
- the control arrangement is configured to read out the states of at least some of said ancilla qubits multiple times before reading out the states acquired by the computing qubits.

10. A quantum computing system according to claim 9, wherein said computing qubits constitute a first matrix pattern on a surface of the quantum pro-cessing unit and said ancilla qubits constitute a second matrix pattern, intertwined with said first matrix pattern, on said surface of the quantum processing unit.

11. A method for reading out states of qubits in a quantum computing system, the method comprising:
- repeatedly performing swap gates among pairs of qubits in a set including a first qubit and a plurality of other qubits to make the state acquired, as a result of a quantum computing operation, by each of said plurality of other qubits appear in turn in said first qubit,
- repeatedly performing readout operations on said first qubit using a readout resonator to which said first qubit is closer than any of said plurality of qubits, thus sequentially reading out the acquired state of each of said plurality of other qubits that was made to appear in turn in the first qubit,
- performing said readout operations in a first subset of all qubits in said quantum processing unit and one or more other subsets of qubits, using at least a respective one of a plurality of readout resonators dedicated for each said subset of qubits,
- in said first subset, using tuned qubits and either parked qubits or fixed frequency qubits in an alternating pattern, wherein parked qubits are qubits kept on a respective resonance frequency and wherein resonance frequencies of the parked qubits or fixed frequency qubits in said alternating pattern follow a rotating pattern of three different frequencies, and
- in a second subset, using tuned and either parked qubits or fixed frequency qubits in an alternating pattern, wherein resonance frequencies of the parked qubits or fixed frequency qubits in said alternating pattern follow the same rotating pattern of three different frequencies as in the first subset;
wherein the tuned qubits and parked or fixed frequency qubits of said first and second subsets are located at vertices of a hexagonal grid so that the three nearest neighbours of each parked or fixed frequency qubit in said grid are tuned qubits and the three nearest neighbours of each tuned qubit in said grid are parked or fixed frequency qubits of which each has a unique one of said three different frequencies.

## Patentansprüche

1. Quantenverarbeitungseinheit, umfassend ein erstes Qubit, eine Mehrzahl von anderen Qubits und einen Ausleseresonator, wobei:
- jedes des ersten und der Mehrzahl von anderen Qubits konfiguriert ist zum Erlangen, als ein Ergebnis einer Quantenrechenoperation, eines Quantenzustands spezifisch für dieses Qubit,
- das erste Qubit näher an dem Ausleseresonator lokalisiert ist als eines der Mehrzahl von anderen Qubits,
- die Quantenverarbeitungseinheit eine Mehrzahl von Kopplern umfasst, wobei die Koppler konfiguriert sind, als Antwort auf jeweilige Swap-Gate-Steuersignale, zum selektiven Durchführen von Swap-Gates zwischen jeweiligen Paaren unter dem ersten und der Mehrzahl von anderen Qubits, um die Qubits der jeweiligen Paare Zustände tauschen zu lassen,
- die Koppler dazu konfiguriert sind, durch wiederholtes Durchführen der Swap-Gates, den erlangten Quantenzustand von jedem der Mehrzahl von anderen Qubits der Reihe nach in dem ersten Qubit erscheinen zu lassen,
- das erste und die Mehrzahl von anderen Qubits eine erste Teilmenge aller Qubits in der Quantenverarbeitungseinheit bilden,
- die Quantenverarbeitungseinheit eine oder mehrere andere Teilmengen von Qubits umfasst,
- die Quantenverarbeitungseinheit eine Mehrzahl von Ausleseresonatoren umfasst, von welchen mindestens ein jeweiliger verfügbar ist, um für jedes der Teilmenge von Qubits dediziert zu werden,
- die Quantenverarbeitungseinheit einen zweidimensionalen Bereich auf einem Substrat umfasst, und
- die Teilmengen von Qubits den zweidimensionalen Bereich aufspannen,
**dadurch gekennzeichnet, dass**
- die erste Teilmenge abgestimmte Qubits und entweder geparkte Qubits oder Festfrequenz-Qubits in einem alternierenden Muster umfasst, wobei geparkte Qubits Qubits sind, die auf einer jeweiligen Resonanzfrequenz gehalten werden,
- Resonanzfrequenzen der geparkten Qubits oder Festfrequenz-Qubits in dem alternierenden Muster einem rotierenden Muster von drei verschiedenen Frequenzen folgen,
- eine zweite Teilmenge abgestimmte und entweder geparkte Qubits oder Festfrequenz-Qubits in einem alternierenden Muster umfasst, wobei Resonanzfrequenzen der geparkten Qubits oder Festfrequenz-Qubits in dem alternierenden Muster dem gleichen rotierenden Muster von drei verschiedenen Frequenzen folgen wie in der ersten Teilmenge,
- die abgestimmten Qubits und geparkten oder Festfrequenz-Qubits der ersten und zweiten Teilmengen an Eckpunkten eines hexagonalen Gitters lokalisiert sind, so dass die drei nächsten Nachbarn von jedem geparkten oder Festfrequenz-Qubit in dem Gitter abgestimmte Qubits sind und die drei nächsten Nachbarn von jedem abgestimmten Qubit in dem Gitter geparkte oder Festfrequenz-Qubits sind, von welchen jedes eine eindeutige der drei verschiedenen Frequenzen aufweist.

2. Quantenverarbeitungseinheit nach Anspruch 1, wobei es mehr als 10, vorzugsweise mehr als 100, und am meisten bevorzugt mehr als 1000 Qubits in dem ersten und der Mehrzahl von anderen Qubits gibt.

3. Quantenverarbeitungseinheit nach einem der Ansprüche 1 oder 2, wobei die Koppler konfiguriert sind zum steuerbaren Ändern einer Reihenfolge, in welcher sie den erlangten Quantenzustand von jedem der Mehrzahl von anderen Qubits in dem ersten Qubit erscheinen lassen.

4. Quantenverarbeitungseinheit nach Anspruch 1, wobei:
- die Koppler konfiguriert sind zum steuerbaren Ändern der Dedikation von Ausleseresonatoren der Mehrzahl von Ausleseresonatoren zu Teilmengen von Qubits.

5. Quantenverarbeitungseinheit nach einem der Ansprüche 1 oder 4, wobei die Mehrzahl von Ausleseresonatoren an einer oder mehreren Kanten des zweidimensionalen Bereichs lokalisiert sind.

6. Quantenverarbeitungseinheit nach einem der Ansprüche 1 oder 4, wobei mindestens einige der Mehrzahl von Ausleseresonatoren über den zweidimensionalen Bereich verteilt sind.

7. Quantenrechensystem, umfassend:
- eine Quantenverarbeitungseinheit nach einem der Ansprüche 1 bis 6,
- eine Steueranordnung, und
- eine Mehrzahl von Signalpfaden zwischen der Quantenverarbeitungseinheit und der Steueranordnung;
wobei die Steueranordnung konfiguriert ist zum Bereitstellen der Swap-Gate-Steuersignale an die Koppler in der Quantenverarbeitungseinheit.

8. Quantenrechensystem nach Anspruch 7, wobei die Steueranordnung konfiguriert ist zum:
- dynamischen Bestimmen einer Auslesereihenfolge von mindestens einigen der Mehrzahl von anderen Qubits in der Quantenverarbeitungseinheit, und
- Bereitstellen der Swap-Steuersignale an die Koppler in Konformität mit der dynamisch bestimmten Auslesereihenfolge, um den erlangten Quantenzustand von jedem der mindestens einigen der Mehrzahl von anderen Qubits in dem ersten Qubit in der bestimmten Auslesereihenfolge erscheinen zu lassen.

9. Quantenrechensystem nach einem der Ansprüche 7 oder 8, wobei:
- die Qubits in der Quantenverarbeitungseinheit Rechen-Qubits und Ancilla-Qubits umfassen, und
- die Steueranordnung konfiguriert ist, zum mehrfachen Auslesen der Zustände von mindestens einigen der Ancilla-Qubits vor einem Auslesen der Zustände, die durch die Rechen-Qubits erlangt sind.

10. Quantenrechensystem nach Anspruch 9, wobei die Rechen-Qubits ein erstes Matrixmuster auf einer Oberfläche der Quantenverarbeitungseinheit bilden und die Ancilla-Qubits ein zweites Matrixmuster, verflochten mit dem ersten Matrixmuster, auf der Oberfläche der Quantenverarbeitungseinheit bilden.

11. Verfahren zum Auslesen von Zuständen von Qubits in einem Quantenrechensystem, wobei das Verfahren umfasst:
- wiederholtes Durchführen von Swap-Gates unter Paaren von Qubits in einer Menge enthaltend ein erstes Qubit und eine Mehrzahl von anderen Qubits, um den Zustand, erlangt als ein Ergebnis einer Quantenrechenoperation, durch jedes der Mehrzahl von anderen Qubits der Reihe nach in dem ersten Qubit erscheinen zu lassen,
- wiederholtes Durchführen von Ausleseoperationen auf dem ersten Qubit unter Verwendung eines Ausleseresonators, zu welchem das erste Qubit näher ist als eines der Mehrzahl von Qubits, und somit sequentielles Auslesen des erlangten Zustands von jedem der Mehrzahl von anderen Qubits, welches dazu gebracht wurde, der Reihe nach in dem ersten Qubit zu erscheinen,
- Durchführen der Ausleseoperationen in einer ersten Teilmenge aller Qubits in der Quantenverarbeitungseinheit und einer oder mehreren anderen Teilmengen von Qubits, unter Verwendung von mindestens einem jeweiligen aus einer Mehrzahl von Ausleseresonatoren, dediziert für jede Teilmenge von Qubits,
- in der ersten Teilmenge, Verwenden von abgestimmten Qubits und entweder geparkten Qubits oder Festfrequenz-Qubits in einem alternierenden Muster, wobei geparkte Qubits Qubits sind, die auf einer jeweiligen Resonanzfrequenz gehalten werden und wobei Resonanzfrequenzen der geparkten Qubits oder Festfrequenz-Qubits in dem alternierenden Muster einem rotierenden Muster von drei verschiedenen Frequenzen folgen, und
- in einer zweiten Teilmenge, Verwenden von abgestimmten und entweder geparkten Qubits oder Festfrequenz-Qubits in einem alternierenden Muster, wobei Resonanzfrequenzen der geparkten Qubits oder Festfrequenz-Qubits in dem alternierenden Muster dem gleichen rotierenden Muster von drei verschiedenen Frequenzen folgen wie in der ersten Teilmenge;
wobei die abgestimmten Qubits und geparkten oder Festfrequenz-Qubits der ersten und zweiten Teilmengen an Eckpunkten eines hexagonalen Gitters lokalisiert sind, so dass die drei nächsten Nachbarn von jedem geparkten oder Festfrequenz-Qubit in dem Gitter abgestimmte Qubits sind und die drei nächsten Nachbarn von jedem abgestimmten Qubit in dem Gitter geparkte oder Festfrequenz-Qubits sind, von welchen jedes eine eindeutige der drei verschiedenen Frequenzen aufweist.

## Revendications

1. Unité de traitement quantique, comprenant un premier bit quantique, une pluralité d'autres bits quantiques et un résonateur de lecture, dans laquelle :
- chacun dudit premier bit quantique et de ladite pluralité d'autres bits quantiques est configuré pour acquérir, en tant que résultat d'une opération de calcul quantique, un état quantique spécifique à ce bit quantique,
- ledit premier bit quantique est situé plus près dudit résonateur de lecture que l'un quelconque de ladite pluralité d'autres bits quantiques,
- l'unité de traitement quantique comprend une pluralité de coupleurs, lesdits coupleurs étant configurés pour, en réponse à des signaux de commande de porte de permutation respectifs, réaliser sélectivement des portes de permutation entre des paires respectives parmi ledit premier bit quantique et ladite pluralité d'autres bits quantiques pour faire permuter les états des bits quantiques desdites paires respectives,
- lesdits coupleurs sont configurés pour entraîner l'apparition, par réalisation de façon répétée desdites portes de permutation, de l'état quantique acquis de chacun de ladite pluralité d'autres bits quantiques tour à tour dans ledit premier bit quantique,
- ledit premier bit quantique et ladite pluralité d'autres bits quantiques constituent un premier sous-ensemble de tous les bits quantiques dans ladite unité de traitement quantique,
- l'unité de traitement quantique comprend un ou plusieurs autres sous-ensembles de bits quantiques,
- l'unité de traitement quantique comprend une pluralité de résonateurs de lecture, dont au moins un résonateur respectif est disponible pour être affecté à chaque ledit sous-ensemble de bits quantiques,
- l'unité de traitement quantique comprend une zone bidimensionnelle sur un substrat, et
- lesdits sous-ensembles de bits quantiques couvrent ladite zone bidimensionnelle, **caractérisée en ce que**
- ledit premier sous-ensemble comprend des bits quantiques réglés et soit des bits quantiques parqués soit des bits quantiques à fréquence fixe dans un motif alterné, les bits quantiques parqués étant des bits quantiques maintenus sur une fréquence de résonance respective,
- les fréquences de résonance des bits quantiques parqués ou des bits quantiques à fréquence fixe dans ledit motif alterné suivent un motif de rotation de trois fréquences différentes,
- un deuxième sous-ensemble comprend des bits quantiques réglés et soit des bits quantiques parqués soit des bits quantiques à fréquence fixe selon un motif alterné, les fréquences de résonance des bits quantiques parqués ou des bits quantiques à fréquence fixe dans ledit motif alterné suivant le même motif de rotation de trois fréquences différentes que dans le premier sous-ensemble,
- les bits quantiques réglés et les bits quantiques parqués ou à fréquence fixe desdits premier et deuxième sous-ensembles sont situés au niveau de sommets d'une grille hexagonale de sorte que les trois plus proches voisins de chaque bit quantique parqué ou à fréquence fixe dans ladite grille soient des bits quantiques réglés et que les trois plus proches voisins de chaque bit quantique réglé dans ladite grille soient des bits quantiques parqués ou à fréquence fixe dont chacun présente une fréquence unique parmi lesdites trois fréquences différentes.

2. Unité de traitement quantique selon la revendication 1, dans laquelle il y a plus de 10, de préférence plus de 100, et le plus de préférence plus de 1000 bits quantiques dans ledit premier bit quantique et ladite pluralité d'autres bits quantiques.

3. Unité de traitement quantique selon l'une quelconque des revendications 1 ou 2, dans laquelle lesdits coupleurs sont configurés pour changer de manière commandable un ordre dans lequel ils entraînent l'apparition de l'état quantique acquis de chacun de ladite pluralité d'autres bits quantiques dans ledit premier bit quantique.

4. Unité de traitement quantique selon la revendication 1, dans laquelle :
- lesdits coupleurs sont configurés pour changer de manière commandable l'affectation de résonateurs de lecture de ladite pluralité de résonateurs de lecture à des sous-ensembles de bits quantiques.

5. Unité de traitement quantique selon l'une quelconque des revendications 1 ou 4, dans laquelle ladite pluralité de résonateurs de lecture sont situés au niveau d'un ou de plusieurs bords de ladite zone bidimensionnelle.

6. Unité de traitement quantique selon l'une quelconque des revendications 1 ou 4, dans laquelle au moins certains de ladite pluralité de résonateurs de lecture sont distribués sur ladite zone bidimensionnelle.

7. Système de calcul quantique, comprenant :
- une unité de traitement quantique selon l'une quelconque des revendications 1 à 6,
- un agencement de commande, et
- une pluralité de trajets de signal entre ladite unité de traitement quantique et ledit agencement de commande ;
dans lequel ledit agencement de commande est configuré pour fournir lesdits signaux de commande de porte de permutation aux coupleurs dans ladite unité de traitement quantique.

8. Système de calcul quantique selon la revendication 7, dans lequel ledit agencement de commande est configuré pour :
- déterminer dynamiquement un ordre de lecture d'au moins certains de la pluralité d'autres bits quantiques dans l'unité de traitement quantique, et
- fournir lesdits signaux de commande de permutation aux coupleurs en conformité avec l'ordre de lecture déterminé dynamiquement, pour entraîner l'apparition de l'état quantique acquis de chacun desdits au moins certains de la pluralité d'autres bits quantiques dans ledit premier bit quantique dans l'ordre de lecture déterminé.

9. Système de calcul quantique selon l'une quelconque des revendications 7 ou 8, dans lequel :
- les bits quantiques dans l'unité de traitement quantique comprennent des bits quantiques de calcul et des bits quantiques auxiliaires, et
- l'agencement de commande est configuré pour lire les états d'au moins certains desdits bits quantiques auxiliaires plusieurs fois avant la lecture des états acquis par les bits quantiques de calcul.

10. Système de calcul quantique selon la revendication 9, dans lequel lesdits bits quantiques de calcul constituent un premier motif de matrice sur une surface de l'unité de traitement quantique et lesdits bits quantiques auxiliaires constituent un deuxième motif de matrice, entrelacé avec ledit premier motif de matrice, sur ladite surface de l'unité de traitement quantique.

11. Procédé de lecture d'états de bits quantiques dans un système de calcul quantique, le procédé comprenant :
- la réalisation de façon répétée de portes de permutation parmi des paires de bits quantiques dans un ensemble incluant un premier bit quantique et une pluralité d'autres bits quantiques pour entraîner l'apparition de l'état acquis, en tant que résultat d'une opération de calcul quantique, par chacun de ladite pluralité d'autres bits quantiques tour à tour dans ledit premier bit quantique,
- la réalisation de façon répétée d'opérations de lecture sur ledit premier bit quantique en utilisant un résonateur de lecture duquel ledit premier bit quantique est plus proche que l'un quelconque de ladite pluralité de bits quantiques, lisant ainsi séquentiellement l'état acquis de chacun de ladite pluralité d'autres bits quantiques dont l'apparition a été entraînée tour à tour dans ledit premier bit quantique,
- la réalisation desdites opérations de lecture dans un premier sous-ensemble de tous les bits quantiques dans ladite unité de traitement quantique et un ou plusieurs autres sous-ensembles de bits quantiques, en utilisant au moins un résonateur de lecture respectif d'une pluralité de résonateurs de lecture affectés à chaque ledit sous-ensemble de bits quantiques,
- dans ledit premier sous-ensemble, l'utilisation de bits quantiques réglés et soit de bits quantiques parqués soit de bits quantiques à fréquence fixe dans un motif alterné, dans lequel les bits quantiques parqués sont des bits quantiques maintenus sur une fréquence de résonance respective et dans lequel les fréquences de résonance des bits quantiques parqués ou des bits quantiques à fréquence fixe dans ledit motif alterné suivent un motif de rotation de trois fréquences différentes, et
- dans un deuxième sous-ensemble, l'utilisation de bits quantiques réglés et soit de bits quantiques parqués soit de bits quantiques à fréquence fixe dans un motif alterné, dans lequel les fréquences de résonance des bits quantiques parqués ou des bits quantiques à fréquence fixe dans ledit motif alterné suivent le même motif de rotation de trois fréquences différentes que dans le premier sous-ensemble ;
dans lequel les bits quantiques réglés et les bits quantiques parqués ou à fréquence fixe desdits premier et deuxième sous-ensembles sont situés au niveau de sommets d'une grille hexagonale de sorte que les trois plus proches voisins de chaque bit quantique parqué ou à fréquence fixe dans ladite grille soient des bits quantiques réglés et que les trois plus proches voisins de chaque bit quantique réglé dans ladite grille soient des bits quantiques parqués ou à fréquence fixe dont chacun présente une fréquence unique parmi lesdites trois fréquences différentes.
